(19) Europäisches Patentamt
European Patent Office
Office européen des brevets

(11) EP 1 219 643 A1

# (12) EUROPEAN PATENT APPLICATION

(43) Date of publication:
**03.07.2002 Bulletin 2002/27**

(51) Int Cl.[7]: **C08F 2/44**, C08K 3/00, C08L 23/02

(21) Application number: **01130601.6**

(22) Date of filing: **21.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.12.2000 JP 2000398554**

(71) Applicant: **Sumitomo Chemical Company, Limited**
**Chuo-ku Osaka 541-8550 (JP)**

(72) Inventors:
- **Nakajima, Hiroyoshi**
  **Ichihara-shi, Chiba (JP)**
- **Fujita, Masayuki**
  **Ithaca, NY 14850 (US)**
- **Atarashi, Kenji**
  **Sodegaura-shi, Chiba (JP)**

(74) Representative: **VOSSIUS & PARTNER**
**Siebertstrasse 4**
**81675 München (DE)**

## (54) Olefin polymer composition

(57) An olefin polymer composition which comprises an olefin polymer and inorganic solid dispersed in the olefin polymer, wherein the coagulation degree θ of the inorganic solid satisfies the following expression:

$$o < \theta \leqq 10,$$

wherein θ is a value determined by dividing d by D, d represents the dispersed particle diameter of the inorganic solid dispersed in the olefin polymer, and D represents the primary particle diameter of the inorganic solid used for being contained in the olefin polymer.

EP 1 219 643 A1

## Description

The present invention relates to an olefin polymer composition in which a solid matter is uniformly dispersed.

Polymers represented by olefin polymers are widely used as automobile parts, domestic electric appliances, miscellaneous goods, packaging materials, optical materials and construction materials. Further, a polymer material of a high performance is required depending on its use, and, for example, propylene polymer compositions containing various inorganic fillers are known.

However, the dispersion of the inorganic filler in the propylene polymer composition obtained by a method of adding the filler to the polymer at plasticization or melt-kneading to contain the filler in the polymer, is not sufficient because the surface energy of the inorganic filler is larger than that of the olefin polymer and the interaction between the inorganic filler and the olefin polymer is small. Therefore, the effect expected by finely dispersing the inorganic particles, for example, a damping property, is not obtained.

An object of the present invention is to provide an olefin polymer composition having excellent properties, particularly damping property, which is obtained by finely dispersing an inorganic solid in an olefin polymer.

The present invention provides an olefin polymer composition which comprises an olefin polymer and inorganic solid dispersed in the olefin polymer, wherein the coagulation degree θ of the inorganic solid satisfies the following expression:

$$0 < \theta \leqq 10,$$

wherein θ is a value determined by dividing "d" by "D", "d" represents the dispersion particle diameter of the inorganic solid dispersed in the olefin polymer, and "D" represents the primary particles diameter of the inorganic solid used for being contained in the olefin polymer.

The present invention is explained in detail below.

The above-mentioned inorganic solid may be those known in the art such as metals, ceramics, alloys. cermets and amorphous alloys. Specific examples of the inorganic material are metals of single substances such as Mg, V, Sr, Pb, Ag, Au, Al, Ga, Ti, W, Fe, Co, Ni, Zn, Cd, P, As, Sb, Bi, Pt and rare earth metals; halides of said metals such as fluorides, chlorides, bromides and iodides; oxides of said metals; chalcogen compounds of said metals such as sulfides; nitrides of said metals; phosphides of saidmetals; arsenides of saidmetals; carbides of said metals; silicides of said metals; borides of said metals; hydroxides of said metals; carbonates of said metals; sulfates of said metals; nitrates of said metals; silicates of said metals, phosphates of said metals; chlorites of said metals: chlorates of said metals; and perchlorates of said metals. The inorganic material may be those containing at least two metal elements. These inorganic materials are described in detail in "Encyclopedia of Experimental Chemistry, 4th edition, vol. 16, Inorganic Compounds" (1993, MARUZEN CO.,LTD).

Among them, a layered inorganic solid is preferably used as the above-mentioned inorganic material. Specific examples thereof are single substances such as graphite, blackphosphorus, arsenic, antimony and bismuth; metal halides such as $MgBr_2$, $CdI_2$, $AsI_3$, $VI_3$, SrFCl, PbFI and $Ag_2F$; metal hydroxides such as $Mg(OH)_2$, $Ca(OH)_2$, $Al(OH)_3$, AlOOH, $Mn(OH)_2$and$Fe(OH)_2$; transitional metal chalcogenides such as $HfS_2$, $MoS_2$, $NiTe_2$, $PtSe_2$ and $ZrS_2$; 13 - 16 group compounds such as GaS, GaSe, GaTe and InSe; 14 - 16 group compounds such as PbO, $Ge_2Te_3$, SnO, $SnS_2$ and $SnSe_2$; layered double hydroxides such as $Mg_6Al_2(OH)_{16}CO_3{\cdot}nH_2O$(hydrotalcite) and $Zn_6Al_2(OH)_{16}CO_3{\cdot}nH_2O$; layered silicate compounds; high temperature superconductors comprising copper oxides; organic conductors comprising charge transfer complexes; organic superconductors; boron nitride (BN); layered titanates; and metal phosphates such as zirconium phosphate. Of these, layered metal oxides and layered metal hydroxides are preferably used, and further, layered metal hydroxides (particularly aluminum hydroxide) are more preferably used from the standpoint of improvement of damping property.

The inorganic solid contained in the olefin polymer composition of the present invention is dispersed in a state of which the coagulation degree θ in the composition satisfies the following expression:

$$0 < \theta \leqq 10,$$

wherein θ is a value determined by dividing "d" by "D" (d/D), "d" represents a dispersion particle diameter of inorganic solid particles dispersed in the olefin polymer, and "D" represents a primary particle diameter of the inorganic solid used for being contained in the olefin polymer.

The dispersion diameter "d" of the inorganic solid is a value calculated by a method described below.

(1)A ultra thin sliced flake of the olefin polymer composition of about 1000 angstroms in thickness is photographed

using a transmission electron microscope (TEM).

(2) The area of the inorganic solid dispersed particle "*i*" in the two dimensional image thus obtained is determined with an image analysis instrument.

(3) The diameter of a circle corresponding to the area is defined as Ri, and Ri is substituted in the following equation:

$$d = \frac{\sum Ri^4}{\sum Ri^3}$$

("*i*" is a number from 1 to n, and n is the number of particles)

The above-mentioned D is a primary diameter of the inorganic solid used for obtaining the olefin polymer composition. Herein, the primary diameter is a diameter corresponding to a BET specific area and is determined by the following equation (1) : D = 6 /(specific gravity x BET specific surface area) (1)

The inorganic solid used for producing the olefin polymer composition of the present invention suitably has a primary particle diameter of 0.1 to 300 nm, more suitably 0.1 to 100 nm, most suitably 0.1 to 50 nm.

The coagulation degree $\theta$ is more than 0 and not more than 10, preferably more than 0 and not more than 8, and more preferably more than 0 and not more than 6.

The content of the inorganic solid in the composition of the present invention is preferably 0.001 to 50% by weight for exhibiting a performance of the inorganic solid, more preferably 0.01 to 30 % by weight, most preferably 0.01 to 10 % by weight.

The dispersion diameter of the inorganic solid contained in the olefin polymer composition is preferably smaller, and specifically, the content of the inorganic solid having a dispersion diameter of 0.1 to 100 nm based on the total inorganic solid contained in the olefin polymer composition, is preferably 70% by weight or more, more preferably 80% or more, most preferably 85% or more.

It is assumed that, when the inorganic solid is dispersed in such a fine state in the olefin polymer composition, the inorganic solid is dispersed with a particle diameter less than a length between entanglement points in molecular chains of polymer constituting the olefin polymer, the inorganic solid becomes difficult to prevent the polymer chains from motions in course of deformation of the olefin polymer depending on an outer stress, and therefore, the physical properties, for example. impact strength is not deteriorated. Further, it is also assumed that because the interfacial area of the inorganic solid with the olefin polymer become larger and the released amount of heat energy generated by friction at the interface increases, for example, the damping property of the olefin polymer is given.

The olefin polymer composition is obtained by polymerizing an olefin with a catalyst for olefin polymerization obtained by contacting a solid catalyst component(A) obtained, by a process comprising the steps:

a step of reducing a titanium compound(② ) represented by the following formula [I] with an organomagnesium compound(③ ) in the presence of an organosilicon compound having an Si-O bond(① ) and an inorganic solid (⑤ ) having a primary particle diameter of 0.1 to 300nm, or reducing a titanium compound(② ) represented by the following formula [I] with an organomagnesium compound(③ ) in the presence of an organosilicon compound having an Si-O bond(① ), an ester compound(④ ) and an inorganic solid(⑤ ) having a primary particle diameter of 0.1 to 300nm, to produce a solid product(a); and

a step of contacting the resulting solid product with a halogenation ability-carrying halogen compound(b) (namely, a halogen compound which has an ability to halogenate) and an inner electron donor compound(c), an organoaluminum compound(B) and an outer electron donor compound (C).

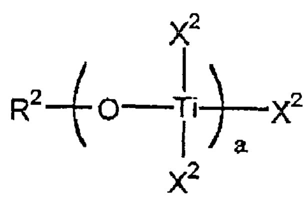

[ I ]

wherein "a" is a number of 1 to 20, $R^2$ is a hydrocarbon group having 1 to 20 carbon atoms, and $X^2$ is a halogen atom or a hydrocarbonoxy group having 1 to 20 carbon atoms, and all of $X^2$ may be the same or different from one another.

(a) Solid product

The solid product used for preparation of the solid catalyst component for polymerization of an olefin is produced by reducing a titanium compound(②) represented by the formula [I] above with an organomagnesium compound (③) in the presence of an organosilicon compound having an Si-O bond(①) and an inorganic solid(⑤) having a primary particle diameter of 0.1 to 300nm, or reducing a titanium compound(②) represented by the formula [I] with an organomagnesium comgound(③) in the presence of an organosilicon compound having an Si-O bond(①), an ester compound(④) and an inorganic solid(⑤) having a primary particle diameter of 0.1 to 300nm.

Particularly, the diameter of the inorganic solid contained in the solid product obtained by reduction preferably becomes 100 times or less, more preferably 50 times or less, most preferably 10 times or less of that of the inorganic solid (⑤) used for obtaining the solid product. As the inorganic solid (⑤), the above-mentioned inorganic solids are listed.

Preferable examples of the organosilicon compound having an Si-O bond(①) used in the present invention are those represented by any one of the following formulas (1) to (3).

$$Si(OR^{10})_tR^{11}{}_{4-t} \qquad (1)$$

$$R^{12}(R^{13}{}_2SiO)_uSiR^{14}{}_3 \qquad (2)$$

$$(R^{15}{}_2SiO)_v \qquad (3)$$

wherein $R^{10}$ is a hydrocarbon group having 1 to 20 carbon atoms; $R^{11}$, $R^{12}$, $R^{13}$, $R^{14}$ and $R^{15}$ are independently of one another a hydrocarbon group having 1 to 20 carbon atoms or a hydrogen atom; "t" is a number satisfying $0 < t \leqq 4$; "u" is an integer of from 1 to 1000; and "v" is an integer of from 2 to 1000.

Examples of the organosilicon compound are tetramethoxysilane, dimethyldimethoxysilane, tetraethoxysilane, triethoxyethylsilane, diethoxydiethylsilane, ethoxytriethylsilane, tetra-i-propoxysilane, di-i-propoxy-di-i-propylsilane, tetrapropoxysilane, dipropoxydipropylsilane, tetrabutoxysilane, dibutoxydibutylsilane, dicyclopentoxydiethylsilane, diethaxydiphenylsilane, cyclohexyloxytrimethylsilane, phenoxytrimethylsilane, tetraphenoxysilane, triethoxyphenylsilane, hexamethyldisiloxane, hexaethyldisiloxane, hexapropyldisiloxane, octaethyltrisiloxane, dimethyl polysiloxane, diphenyl polysiloxane, methylhydro polysiloxane and phenylhydro polysiloxane.

Among the organosilicon compounds represented by the above formulas (1) to (3), more preferable are those represented by the formula (1), wherein t satisfying $1 \leqq t \leqq 4$ is preferable. Of these, tetraalkoxysilane compounds of t = 4 are particularly preferred, and the most preferred is tetraethoxysilane.

Examples of $R^2$ in the above formula [I] representing the titanium compound(②) are alkyl groups such as methyl, ethyl, propyl, i-propyl, butyl, i-butyl, amyl, i-amyl, hexyl, heptyl, octyl, decyl and dodecyl groups; aryl groups such as phenyl, cresyl, xylyl and naphthyl groups; cycloalkyl groups such as cyclohexyl and cyclopentyl groups; allyl groups such as a propenyl group; and aralkyl groups such as a benzyl group. Among these, alkyl groups having 2 to 18 carbon atoms and aryl groups having 6 to 18 carbon atoms are preferred, and linear alkyl groups having 2 to 18 carbon atoms are particularly preferred.

As the halogen atom represented by $X^2$ in the above formula [I], a chlorine atom, a bromine atom and an iodine atom are exemplified. Of these, a chlorine atom is particularly preferred, As hydrocarbon groups in the oxyhydrocarbon groups having 1 to 20 carbon atoms represented by $X^2$, the same hydrocarbon groups as the above-mentioned $R^2$ can be exemplified. Of these, alkoxy groups having linear alkyl groups of 2 to 18 carbon atoms are particularly preferable as $X^2$.

Preferable "a" in the above formula (I) is a number satisfying $1 \leqq a \leqq 5$.

Examples of the titanium compound(②) having "a" of not less than 2 are tetra-i-propyl polytitanate (a mixture of compounds of "a" = 2 ~ 10), tetra-n-butylpolytitanate (amixture of compounds of "a" = 2 - 10), tetra-n-hexyl polytitanate (a mixture of compounds of "a" = 2 - 10), tetra-n-octyl polytitanate (a mixture of compounds of "a" = 2 - 10) and a condensate of a tetraalkoxytitanium obtained by reacting a tetralkoxytitanium with a small amount of water.

More preferable titanium compounds(②) are those represented by the following formula (4).

$$Ti(OR^2)_qX^3{}_{4-q} \qquad (4)$$

wherein $R^2$ is a hydrocarbon group having 1 to 20 carbon atoms, $X^3$ is a halogen atom, and q is a number satisfying $0 < q \leqq 4$, preferably $2 \leqq q \leqq 4$, and particularly preferably q = 4.

Examples of the titanium compound represented by the above formula (4) are alkoxytitanium trihalide such as methoxytitanium trichloride, ethoxytitanlum trichloride, butoxytitanium trichloride, phenoxytitanium trichloride and ethoxytitanium tribromide; dialkoxytitanium dihalides such as dimethoxytitanium dichloride, diethoxytitanium dichloride, dibutoxytitanium dichloride, diphenoxytitanium dichloride and diethoxytitaniumdibromide; trialkoxytitaniummonohalides such as trimethoxytitanium chloride, triethoxytitanium chloride, tributoxytitanium chloride, triphenoxytitanium chloride and triethoxytitanium bromide; and tetraalkoxytitanium compounds such as tetramethoxytitanium, tetraethoxytitanium, tetrabutoxytitanium and tetraphenoxytltanium.

From a viewpoint of an activity of a catalyst obtained, preferable "a" in the above formula [I] is 2 or 4. From the same viewpoint, tetra-n-butyl polytitanate is more preferable, and tetra-n-butyltitanium dimer or tetra-n-butyltitanium tetramer is particularly preferable.

Examples of the organomagnesium compound used in the present invention are those having a magnesium-carbon bond. Particularlypreferable examples thereof are a Grignard compound represented by the following formula (5), and a dihydrocarbyl magnesium compound represented by the following formula (6).

$$R^{16}MgX^5 \quad (5)$$

$$R^{17}R^{18}Mg \quad (6)$$

In these formulas, Mg is a magnesium atom, $R^{16}$ is a hydrocarbon group having 1 to 20 carbon atoms, $R^{17}$ and $R^{18}$ are independently of each other a hydrocarbon group having 1 to 20 carbon atoms, $X^5$ is a halogen atom, and $R^{17}$ and $R^{18}$ may be the same or different from each other.

Examples of $R^{16}$ to $R^{18}$ are alkyl, aryl, aralkyl and alkenyl groups having 1 to 20 carbon atoms such as methyl, ethyl, propyl, i-propyl, butyl, sec-butyl, tert-butyl, i-amyl, hexyl, octyl, 2-ethylhexyl, phenyl and benzyl groups. It is particularly recommendable to use the Grignard compound represented by the above formula (5) in the form of an ether solution thereof from a viewpoint of polymerization activity of a catalyst obtained.

It is permitted to use the organomagnesium compound in combination with an organometallic compound to form a hydrocarbon soluble complex. Examples of the organomatallic compounds are compounds of Li, Be, B, Al and Zn.

Examples of the ester comgound(④ ) are esters of mono-carboxylic acid and esters of poly-carboxylic acid. As the ester compound, for example, saturated aliphatic carboxylic acid esters, unsaturated aliphatic carboxylic acid esters, allcyclic carboxylic acid esters and aromatic carboxylic acid esters can be enumerated.

Specific examples of the ester compounds are methyl acetate, ethyl acetate, phenyl acetate, methylpropionate, ethyl propionate, ethyl butyrate, ethyl valerate, methyl acrylate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimethylmaleate, dibutylmaleate, diethyl itaconate, dibutyl itaconate, monoethyl phthalate, dimethyl phthalate, methyl ethyl phthalate, diethyl phthalate, di-n-propyl phthalate, di-1-propyl phthalate, di-n-butyl phthalate, di-i-butyl phthalate, di-n-octyl phthalate and diphenyl phthalate.

Among these ester compounds, unsaturated aliphatic carboxylic acid esters such as methacrylic acid esters andmaleic acid esters, and aromatic carboxylic acid esters such as phthalic acid esters are preferred. Dialkyl phthalates are particularly preferred.

It is preferable to use the titanium compound(② ), organosilicon compound(① ), inorganic solid(⑤ ) and ester compound(④ ) which are dissolved, diluted or swollen in or with a solvent.

Examples of the solvent are aliphatic hydrocarbons such as hexane, heptane, octane and decane; aromatic hydrocarbons such as toluene and xylene; alicyclic hydrocarbons such as cyclohexane, methylcyclohexane and decalin; and ether compounds such as diethyl ether, dibutyl ether, diisoamyl ether and tetrahydrofuran. Of these, preferred is a solvent capable of uniformly dispersing the inorganic solid(⑤ ). A particularly preferred solvent is toluene.

A temperature of the reduction reaction for producing the solid product is usually from -50 to 70°C, preferably from -30 to 50°C. and particularly preferably from -25 to 35°C. A time required for the reduction reaction is not particularly limited, and it is usually from about 30 minutes to about 6 hours. After the reaction is carried out at the above-mentioned temperature, it is permitted to further carry out a post-reaction at a temperature of from 20 to 120°C.

The organosilicon compound(① ) is used in an amount of usually from 1 to 500, preferably from 1 to 300, and particularly preferably from 3 to 100 in terms of an atomic ratio, Si/Ti, i.e. a ratio of a silicon atom in the organosilicon compound (① ) to a titanium atom in the titanium compound.

The organomagnesium compound(③ ) is used in an amount of usually from 0.1 to 10, preferably from 0.2 to 5.0, and particularly preferably from 0.5 to 2.0 in terms of an atomic ratio, (Ti + Si)/Mg, i.e. a ratio of the sum of a titanium atom in the titanium compound and a silicon atom in the organosilicon compound(① ) to a magnesium atom in the organomagnesium compound(③ ).

The titanium compound, organosilicon compound(① ) and organomagnesium compound(③ ) may be used in an amount of from 1 to 51, preferably 2 to 31, and particularly preferably 4 to 26 in terms of an atomic molar ratio, Mg/Ti, in the solid catalyst component obtained.

An amount of the inorganic solid(⑤ ) used is from 0.05 to 10000 g/mmol, preferably from 0.1 to 5000 g/mmol, and more preferably from 0.5 to 2000 g/mmol, in terms of a weight (g) per mmol of a titanium atom in the titanium compound.

The ester compound(④ ) is optionally used in an amount of usually from 0.5 to 100, preferably from 1 to 60, and particularly preferably from 2 to 30 in terms of a molar ratio, estercompound/Ti, i.e. aratio of the ester compound to a titanium atom in the titanium compound.

The solid product obtained by the reduction reaction is usually subjected to solid-liquid separation, and washed several times with an inert hydrocarbon solvent such as hexane, heptane and toluene.

The solid product is used for preparation of a solid catalyst for olefin polymerization, as mentioned above, which finely disperses the inorganic solid in the olefin polymer to be produced.

The halogenation ability-carrying halogen compound(b) may be any compound capable of halogenating the solid product. Preferred examples of said compound are organic acid halides, halogen compounds of the 4 group element and halogen compounds of the 13 or 14 group element.

A preferable organic acid halide mentioned above is mono- or poly-carboxylic acid halides. Examples of said halides are aliphatic carboxyllc acid halides, alicyclic carboxylic acid halides and aromatic carboxylic acid halides. Specific examples of the organic acid halide are acetyl chloride, propionic chloride, butyric chloride, valeric chloride, acrylic chloride, methacrylic chloride, benzoic chloride, toluic chloride, anisic chloride, succinic chloride, malonic chloride, maleic chloride, itaconic chloride and phthalic chloride. Of these, aromatic carboxylic acid chlorides such as benzoic chloride, toluic chloride and phthalic chloride are preferred. Aromatic dicarboxylic acid dichlorides are more preferred, and phthalic chloride is particularly preferred.

As the above-mentioned halogen compound (halogen-containing compound) of an element belonging to the 4 group of elements in the periodic table of the elements, those of titanium are preferable, and a titanium compound represented by the following formula (7) is more preferable.

$$Ti(OR^9)_bX^4{}_{4-b} \qquad (7)$$

Examples of the group $R^9$ in the above formula (7) are alkyl groups such as methyl, ethyl, propyl, 1-propyl, butyl, i-butyl, tert-butyl, amyl, i-amyl, tert-amyl, hexyl, heptyl , octyl, decyl and dodecyl groups; aryl groups such as phenyl, cresyl, xylyl and naphthyl groups; allyl group such as propenyl; and aralkyl groups such as a benzyl group. Among these $R^9$, alkyl groups having 2 to 18 carbon atoms and aryl groups having 6 to 18 carbon atoms are preferable, and linear alkyl groups having 2 to 18 carbon atoms are particularly preferred.

As $X^4$ in the above formula (7), a chlorine atom, a bromine atom and an iodine atom are exemplified. Of these, a chlorine atom is particularly preferable.

A number of "b" in the above formula (7) satisfies $0 \leqq b < 4$, preferably $0 \leqq b \leqq 2$, and particularly preferably $b = 0$.

Specific examples of the titanium compound represented by the above formula (7) are titanium tetrahalides such as titanium tetrachloride, titanium tetrabromide and titanium tetraiodide; hydrocarbyloxytitanium trihalides such as methoxytitanium trichloride, ethoxytitanium trichloride, butoxytitanium trichloride, phenoxytitanium trichloride and ethoxytitanium tribromide; and dihydrocarbyloxytitanium dihalides such as dimethoxytitanium dichloride, diethoxytitanium dichloride, dibutoxytitanium dichloride, diphenoxytitanium dichloride, and diethoxytitanium dibromide. Among these titanium compounds, the most preferred is titanium tetrachloride.

The "halogen compound of the 13 or 14 group element means a compound having at least one 13 group element-halogen bond, or a compound having at least one 14 group element-halogen bond. Preferred is a compound represented by the following formula (8). In the formula, M is an atom of the group 13 or 14, $R^{27}$ is a hydrocarbon group having 1 to 20 carbon atoms, $X^6$ is a halogen atom, m is a valency of M and n is a number satisfying $0 < n \leqq m$.

$$MR^{27}{}_{m-n}X^6{}_n \qquad (8)$$

Examples of the above-mentioned 13 group atom are B, Al, Ga, In and Tl. Of these, preferred are B and Al, and more preferred is Al. Examples of the above-mentioned 14 group atom are C, Si, Ge, Sn and Pb. Of these, preferred are Si, Ge and Sn. As M, the 14 group atom is particularly preferred and Si is most preferred.

When M is Si in the above formula (8), the symbol "m" is 4, and the symbol "n" is preferably 3 or 4. Examples of $X^6$ are F, Cl, Br and I. Of these, preferred is Cl.

Examples of $R^{27}$ in the above formula (8) are alkyl groups such as methyl, ethyl, n-propyl, i-propyl, n-butyl, i-butyl, amyl, i-amyl, hexyl, heptyl, octyl, decyl and dodecyl groups; aryl groups such as phenyl, tolyl, cresyl, xylyl and naphthyl groups; cycloalkyl groups such as cyclohexyl and cyclopentyl groups; allyl groups such as propenyl group; and aralkyl groups such as benzyl group. Of these, preferred are alkyl and aryl groups and particularly preferred are methyl, ethyl, n-propyl, phenyl and p-tolyl groups.

Specific examples of the halogen compounds of the 13 group element are trichloroboron, methyldichloroboron, ethyldichloroboron, phenyldichloroboron, cyclohexyldichloroboron, dimethylchloroboron, methylethylchloroboron, trichloroaluminum, methyldichloroaluminum, ethyldichloroaluminum, phenyldichloroaluminum, cyclohexyldichloroaluminum, dimethylchloroaluminum, diethylchloroaluminum, methylethylchloroaluminum, ethylaluminum sesquichloride, gallium chloride, gallium dichloride, trichlorogallium, methyldichlorogallium, ethyldichlorogallium, phenyldichlorogallium, cyclohexyldichlorogallium, dimethylchlorogallium, methylethylchlorogallium, indium chloride, indium trichloride, methylindium dichloride, phenylindium dichloride, dimethylindium chloride, thallium chloride, thallium trichloride, methylthallium dichloride, phenylthallium dichloride, dimethylthallium chloride and those named by replacing the chloro in the above mentioned compounds with fluoro, bromo or iodo, respectively.

Specific examples of the hologeno compounds of the 14 group element are tetrachloromethane, trichloromethane, dichloromethane, monochloromethane, 1,1,1 -trichloroethane, 1,1-dichloroethane, 1,2-dichloroethane. 1,1,2,2-tetrachloroethane, tetrachlorosilane, trichlorosilane, methyltrichlorosilane, ethyltrichlorosilane, n-propyltrichlorosilane, n-butyltrichlorosilane, phenyltrichlorosilane, benzyltrichlorosilane, p- tolyltrichlorosilane, Gyclohexyltrichlorosilane, dichlorosilane, methyldichlorosilane, ethyldichlorosilane, dimethyldichlorosilane, diphenyldichlorosilane, methylethyldichlorosilane, monochlorosilane. trimethylchlorosilane, triphenylchlorosilane, tetrachlorogermane, trichlorogermane, methyltrichlorogermane, ethyltrichlorogermane, phenyltrichlorogermane, dichlorogermane, dimethyldichlorogermane, diethyldichlorogermane, diphenyldichlorogermane, monochlorogermane, trimethylchlorogermane, triethylchlorogermane, tri-n-butylchlorogermane, tetrachlorotin, methyltrichlorotin, n-butyltrichlorotin, dimethyldichlorotin, di-n-butyldichlorotin, di-i-butyldichlorotin, diphenyldichlorotin, divinyldichlorotin, methyltrichlorotin, phenyltrichlorotin, dichlorolead, methylchlorolead, phenylchlorolead, dichlorolead, methylchlorolead, phenylchlorolead and those named by replacing the chloro in the above-mentioned compounds with fluoro, bromo or iodo, respectively.

From aviewpoint of polymerization activity of the catalyst obtained, particularly preferred are tetrachlorosilane, phenyltrichlorosilane, methyltrichlorosilane, ethyltrichlorosilane, n-propyltrichlorosilane and p-tolyltrichlorosilane as the halogen compound of the 13 or 14 group compound.

The term "inner electron donor compound" used in the present invention means an electron donor compound used in a process for producing a solid catalyst component for an olefin polymerization. Examples of the electron donor compound are oxygen-containing compounds such as ethers (including diethers), ketones, aldehydes, carboxylic acids, organic acid esters, inorganic acid esters, organic acid amides, inorganic acid amides and acid anhydrides; and nitrogen-containing compounds such as ammonia, amines, nitriles and isocyanates. Of these, organic acid esters or ethers are preferred, and carboxylic acid esters or ethers are more preferred.

As the carboxylic acid esters, mono-carboxylic acid esters and poly-carboxylic acid esters can be exemplified. More specifically, saturated aliphatic carboxylic acid esters, unsaturated aliphatic carboxylic acid esters, alicyclic carboxylic acid esters and aromatic carboxylic acid esters can be exemplified. More specifically, methyl acetate, ethyl acetate, phenyl acetate, methyl propionate, ethyl propionate, ethyl butyrate, ethyl valerate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimethyl maleate, dibutyl maleate, diethyl itaconate, dibutyl itaconate, monoethyl phthalate, dimethyl phthalate, methyl ethyl phthalate, diethyl phthalate, di-n-propyl phthalate, di-i-propyl phthalate, di-n-butyl phthalate, di-i-butyl phthalate, di-n-octyl phthalate and diphenyl phthalate can be exemplified. Among these, unsaturated aliphatic carboxylic acid esters such as methacrylic acid esters and maleic acid esters, and aromatic carboxylic acid esters such as benzoic acid esters and phthalic acid esters are preferred, and aromatic polycarboxylic acid esters are particularly preferred. Of these, dialkyl phthalates are most preferred.

As the ether, dialkyl ethers and diether compounds represented by the following formula can be exemplified.

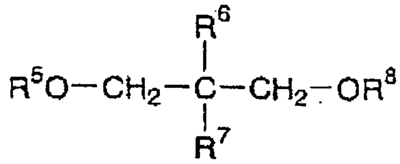

In the above formula, $R^5$ to $R^8$ are independently of one another a linear or branched-chain or alicyclic alkyl group having 1 to 20 carbon atoms; an aryl group; or an aralkyl group, provided that $R^6$ and $R^7$ may be independently of each other a hydrogen atom.

Examples of the ether include dimethyl ether, diethyl ether, di-n-butyl ether, methyl ethyl ether, methyl n-butyl ether, methyl cyalohexyl ether, 2,2-di-i-butyl-1,3-dimethoxypropane, 2-1-propyl-2-i-pentyl-1,3-dimethoxypropane, 2,2-bis(cyclohexylmethyl)-1,3-dimethoxypropane, 2-i-propyl-2-3,7-dimethyloctyl-1,3-dimethoxypropane, 2,2-di-i-propyl-1,3-dimethoxypropane, 2-1-propyl-2-cyclohexylmethyl-1,3-dimethoxypropane, 2,2-dicyclohexyl-1,3-dimethoxypropane, 2-i-propyl-2-i-butyl-1,3-dimethoxypropane, 2,2-di-i-propyl-1,3-dimethoxypropane, 2,2-di-propyl-1,3-dimethoxypropane, 2-i-propyl-2-cyclohexyl-1,3-dimethoxypropane, 2-i-propyl-2-cyclopentyl-1,3-dimethoxypropane, 2,2-dicyclopentyl-1,3-dimethoxypropane and 2-heptyl-2-pentyl-1,3-dimethoxypropane. Two or more thereof can be used in combination.

Preferably, respective $R^5$ to $R^8$ are independently an alkyl group, and more preferably, respective R6 and R7 are independently a branched or cyclic alkyl group and respective $R^5$ and $R^8$ are independently a straight chain alkyl group in the general formula described above.

A method for contacting components in a process for producing the solid catalyst component in accordance with the present invention is not limited, and said method may be any method known in the art. Examples of the method are a slurry method and a mechanical pulverization method using a ball mill. However, the latter method is not recommendable from an industrial point of view, because a lot of fine powders may be produced to make a particle size distribution of the solid catalyst component obtained broad. Therefore, it is recommendable to carry out the contact in the presence of a diluent.

A solid catalyst component in a reaction mixture obtained in a step of the above-mentioned contacting is usually separated by a solid-liquid separation. The solid catalyst component separated can be used as they are for producing a polymerization catalyst. However, it is recommendable to wash the solid catalyst component with a diluent, which is inert to the solid catalyst component, in order to remove unnecessaries contained in the solid catalyst component.

Examples of the above-mentioned diluent are aliphatic hydrocarbons such as pentane, hexane, heptane and octane; aromatic hydrocarbons such as benzene, toluene and xylene; alicyclic hydrocarbons such as cyclohexane and cyclopentane; and halogenated hydrocarbons such as 1,2-dichloroethane and monochlorobenzene.

When the diluent is used during the above-mentioned contact, an amount of the diluent used per contact is usually from 0.1 ml to 1000 ml, and preferably from 1 ml to 100 ml per g of the solid product.

The contact and washing can be carried out usually at a temperature of from -50 to 150°C, preferably from 0 to 140°C, and more preferably from 60 to 135°C. A time for the contact is not particularly limited. It is preferably from 0.5 to 8 hours, and more preferably from 1 to 6 hours. Also, a time for the Washing is not particularly limited. It is preferably from 1 to 120 minutes, and more preferably from 2 to 60 minutes.

The halogenation ability-carrying halogen compound is used in an amount of usually from 1 to 2000 mol, preferably from 5 to 1000 mol, and more preferably from 10 to 800 mol per mol of the titanium atom contained in the solid product.

The inner electron donor compound is used in an amount of usually from 0.1 to 50 mol, preferably from 0.3 to 30 mol, and more preferably from 0.5 to 20 mol per mol of the titanium atom in the solid product.

In the case that the contact is carried out more than one time, or in the case that more than one kind of the halogenation ability-carrying halogen compound or more than one kind of the inner electron donor compound are used in each contact, the above-mentioned amount of the halogenation ability-carrying halogen compound, and that of the inner electron donor compound mean the amount per one contact or per one kind of said compound.

The solid catalyst component obtained by the step of solid-liquid separating is usually washed several times with an inert hydrocarbon solvent such as hexane and heptane, and then used for producing an olefin polymerization catalyst. From a viewpoint of polymerization activity and stereospecific polymerization ability of the catalyst obtained, it is recommendable that the solid catalyst component obtained by the solid-liquid separation is washed at a temperature of 50 to 120°C at least one time with a large amount of a halogenated hydrocarbon solvent such as monochlorobenzene or an aromatic hydrocarbon solvent such as toluene, successively washed several times with an aliphatic hydrocarbon solvent such as hexane, and then used for producing the olefin polymerization catalyst.

A catalyst for olefin polymerization used for producing of the olefin polymer composition of the present invention in which the inorganic solid is finely dispersed, is prepared using the solid catalyst component(A) thus obtained.
The catalyst for olefin polymerization is obtained by contacting the solid catalyst component(A) with an organoaluminum compound(B) and an outer electron donor compound(C).

(B) Organoaluminum compound

The organoaluininum compound (B) used in the process for preparing the olefin polymerization catalyst means a compound having at least one Al-carbon bond in the molecule. Typical examples thereof are those represented by the following formulas (9) and (10).

$$R^{19}{}_{w}\,AlY_{3-w} \qquad (9)$$

$$R^{20}R^{21}Al\text{-}O\text{-}AlR^{22}R^{23} \qquad (10)$$

wherein $R^{19}$ to $R^{23}$ are independently of one another a hydrocarbon group having 1 to 20 carbon atoms; Y is a halogen atom, a hydrogen atom or an alkoxy group; and w is a number satisfying $2 \leqq w \leqq 3$.
Specific examples of said compound are trialkylaluminums such as triethylaluminum, tri-i-butylaluminum and trihexylaluminum; dialkylaluminum hydrides such as diethylaluminum hydride and di-i-butylaluminum hydride; dialkylaluminum halides such as diethylaluminum chloride; mixtures of trialkylaluminums and dialkylaluminum halides such as a mixture of triethylaluminum and diethylaluminum chloride; and alkylalumoxanes such as tetraethyldialumoxane and tetrabutyldialumoxane.
Among these, trialkylaluminums, mixtures of trialkylaluminums and dialkylaluminum halides and alkylalumoxanes are preferred. Triethylaluminum, tri-i-butylaluminum, a mixture of triethylaluminum and diethylaluminum chloride, and tetraethyldialumoxane are particularly preferred.

(C) Outer electron donor compound

The "outer electron donor compound" used in the present invention means an electron donor compound used for the process for producing the olefin polymerization catalyst in accordance with the present invention. As the outer electron donor compound(C), for example, oxygen-containing electron donor compounds such as ethers including diethers, ketones, aldehydes, carboxylic acids, organic acid esters, inorganic acid esters, organic acid amides, inorganic acid amides and acid anhydrides; and nitrogen-containing electron donor compounds such as ammonia, amines, nitriles and isocyanates are enumerated. Of these, inorganic acid esters and diethers are preferred, and alkoxysilicon compounds represented by the following formula (11) are more preferred,

$$R^{3}{}_{r}Si(OR^{4})_{4-r} \qquad (11)$$

wherein $R^3$ is a hydrocarbon group having 1 to 20 carbon atoms or a hydrogen atom; $R^4$ is a hydrocarbon atoms having 1 to 20 carbon atoms; and r is a number satisfying $0 \leqq r < 4$. All of R3 and all of $R^4$ are the same or different from one another, respectively.
Particularly preferred electron donor compounds are alkoxysilicon compounds represented by the following formula (12),

$$R^{24}R^{25}Si(OR^{26})_2 \qquad (12)$$

wherein $R^{24}$ is a $C_{3-20}$ hydrocarbon group, whose carbon atom adjacent to Si is secondary or tertiary; $R^{25}$ is a $C_{1-20}$ hydrocarbon group; and $R^{26}$ is a $C_{1-20}$ hydrocarbon group and preferably a $C_{1-5}$ hydrocarbon group.
As $R^{24}$, for example, branched chain alkyl groups such as isopropyl, sec-butyl, tert-butyl and tert-amyl groups; cycloalkyl groups such as cyclobutyl, cyclopentyl and cyclohexyl groups; cycloalkenyl groups such as a cyclopentenyl group; and aryl groups such as pheny and tolyl groups are enumerated.
As $R^{25}$, for example, linear alkyl groups such as methyl, ethyl, propyl, butyl and pentyl groups; branched chain alkyl groups such as isopropyl, sec-butyl, tert-butyl and tert-amyl groups; cycloalkyl groups such as cyclopentyl and

cyclohexyl groups; cycloalkenyl groups such as a cyclopentenyl group; and aryl groups such as pheny and tolyl groups are enumerated.

Specific examples of the above-mentioned alkoxysilicon compounds are di-i-propyldimethoxysilane, di-i-butyldimethoxysilane, di-tert-butyldimethoxysilane, tert-butylmethyldimethoxysilane, tert-butylethyldimethoxysilane, tert-butyl-n-ptropyldimethoxysilane, tert-butyl-n-butyldimethoxysilane, tert-amylmethyldimethoxysilane, tert-amylethyldimethoxysilane, tert-amyl-n-propyldimethoxysilane, tert-amyl-n-butyldimethoxysilane, i-butyl-i-propyldimethoxysilane, tert-butyl-i-propyldimethoxysilane, dicyclobutyldimethoxysilane, cyclobutyl-i-propyldimethoxysilane, cyclobutyl-i-butyldimethoxysilane, cyclobutyl-tert-butyldimethoxysilane, dicyclopentyldimethoxysilane, cyclopentyl-i-propyldimethoxysilane, cyclopentyl-1-butyldimethoxysilane, cyclopentyl-tert-butyldimethoxysilane, dicylohexyldimethoxysilane, cyclohexylmethyldimethoxysilane, cyclohexylethyldimethoxysilane, cyclohexyl-i-propyldimethoxysilane, cyclohesyl-i-butyldimethoxysilane, cyclohexyl-tert-butyldimethoxysilane, cyclohexylcyclopentyldimethoxysilane, cyclohexylphenyldimethoxysilane, diphenyldimethoxysilane phenymethyldimethoxysilane, phenyl-i-propyldimethoxysilane, phenyl-i-butyldimethoxysilane. phenyl-tert-butyldimethoxysilane, phenylcyclopentyldimethoxysilane, di-i-propyldiethoxysilane, di-i-butyldiethoxysilane, di-tert-butyldiethoxysilane, tert-butylmethyldiethoxysilane, tert-butylethyldiethoxysilane, tert-butyl-n-propyldiethoxysilane, tert-butyl-n-butyldiethoxysilane, tert-amylmethyldiethoxysilane, tert-amylethyldiethoxysilane, tert-amyl-n-propyldiethoxysilane, tert-amyl-n-butyldiethoxysilane, dicyclopentyldiethoxysilane, dicyclohexyldiethoxysilane, cycohexylmethyldiethoxysilane, cyclohexylethyldiethoxysilane, diphenyldiethoxysilane, phenylmethyldiethoxysilane and 2-norbornanemethyldiethoxysilane.

[Production of olefin polymer]

The "olefin" used in the process for producing an olefin polymer in accordance with the present invention means that having not less than 2 carbon atoms. Examples of the olefin are linear monoolefin such as ethylene, propylene, butene-1, pentene-1, hexane-1, heptene-1, octene-1 and decene-1; branched chain monoolefin such as 3-methylbutene-1, 3-methylpentene-1 and 4-methylpenetene-1; and vinylcyclohexane. The olefin may be used each alone or in a mixture of two or more.

In the process for producing an olefin polymer in accordance with the present invention, it is preferred to polymerize ethylene or $\alpha$ -olefin, and more preferred to copolymerize a mixed olefin containing ethylene or propylene or butane-1 as a main component.

As an olefin polymer obtained by the process for producing an olefin polymer in accordance with the present invention, propylene polymers having a polypropylene crystal structure are particularly preferable. Among them, homopolymers of propylene and copolymers of a mixed olefin containing propylene as a main component are particularly preferable.

In the process for producing an olefin polymer in accordance with the present invention, it is permitted to use a mixture of ethylene and at least one olefin selected from the above-mentioned $\alpha$ -olefins. Further, it is permitted to additionally use, as a comonomer, a compound having several unsaturated bonds such as a conjugated diene and a non-conjugated diene. With respect to a polymerization method, it is also possible to carry out a hetero-block copolymerization, in which the polymerization is carried out.

The term "contacting" in the process for producing the catalyst for olefin polymerization in accordance with the present invention means a step, which can form the catalyst for olefin polymerization by interaction among the solid catalyst component, the organoaluminum compound and the outer electron donor compound. Examples of said contacting are (1) mixing the above-mentioned three components, (2) diluting each of said three components with a solvent to obtain respective solutions and mixing them, and (3) supplying separately said three components in a polymerization zone. In supplying said three components each in the polymerization zone, or in supplying the catalyst in the polymerization zone, it is recommendable to supply them under a water free condition in an atmosphere of an inert gas such as nitrogen or argon.

The catalyst for olefin polymerization, which is used in the process for producing the olefin polymer in accordance with the present invention, may be a catalyst obtained by contacting the above-mentioned three components, or may be a catalyst obtained by contacting (1) a pre-polymerized solid catalyst component mentioned below, (2) the organoaluminum compound and (3) the outer electron donor compound.

The above-mentioned "pre-polymerized solid catalyst component" means a solid catalyst component obtained by polymerizing a small amount of an olefin in the presence of the above-mentioned solid catalyst component, the organoaluminum compound and, if necessary, the outer electron donor compound. It is recommendable to polymerize the olefin in a slurry state. Examples of a solvent used for obtaining the slurry are inert hydrocarbons such as propane, butane, isobutane, pentane, isopentane, hexane, heptane, octane, cyclohexane, benzen and toluene. A partial or total amount of the inert hydrocarbon solvent may be replaced with a liquid olefin.

In the pre-polymerization, the organoaluminum compound is used in an amount of usually from 0.5 to 700 mol, preferably from 0.8 to 500 mol, and particularly preferably from 1 to 200 mol per mol of the titanium atom in the

solid catalyst component.

A concentration of the slurry in the pre-polymerization is preferably from 1 to 500 g-solid catalyst component/liter-solvent, and particularly preferably from 3 to 300 g-solid catalyst component/liter-solvent. A pre-polymerization temperature is preferably from -20 to 100°C, and particularly preferably from 0 to 80°C. A partial pressure of the olefin in the gas phase portion during the pre-polymerization is preferably from 0.01 to 20 $kg/cm^2$, and particularly preferably from 0.1 to 10 $kg/cm^2$, but the olefin which is liquid at that pressure and temperature for the pre-polymerization is not limited thereto. A time for the pre-polymerization is not particularly limited, and it is usually preferably from 2 minutes to 15 hours.

Examples of a process for contacting respective components in the pre-polymerization are (1) a process comprising the steps of contacting the solid catalyst component(A) with the organoaluminum compound(B), and further contacting with the olefin, and (2) a process comprising the steps of contacting the solid catalyst component(A) with the olefin, and further contacting with the organoaluminum compound(B).

Examples of a process for supplying the olefin in the pre-polymerization are (1) a process comprising the step of supplying a pre-determined amount of the olefin successively in the polymerization zone while retaining an inner pressure of the polymerization zone to a pre-determined degree, and (2) a process comprising the step of supplying the pre-determined total amount of the olefin in the polymerization zone at the beginning. In order to regulate a molecular weight of the polymer obtained in the pre-polymerization, a chain transfer agent such as hydrogen may be used.

If desired, a part or the total amount of the above-mentioned electron donor compound may be used in the pre-polymerization. The electron donor compound is used in an amount of usually from 0.01 to 400 mol, preferably from 0.02 to 200 mol, and particularly preferably from 0.03 to 100 mol per mol of the titanium atom in the solid catalyst component, and usually from 0.003 to 5 mol, preferably from 0.005 to 3 mol, and particularly preferably from 0.01 to 2 mol per mol of the organoaluminum compound.

How to supply the electron donor compound(C) to a polymerization reactor in the pre-polymerization is not particularly limited. It is permitted to supply the electron donor compound independently from the organoaluminum compound, or contact both in advance and then supply the resulting product. The olefin used in the pre-polymerization may be the same as or different from that used in the main polymerization.

In the main polymerization, the organoaluminum compound is used in an amount of usually from 1 to 1000 mol, and particularly preferably from 5 to 600 mol per mol of the titanium atom in the solid catalyst component.

In the main polymerization, the outer electron donor compound(C) is used in an amount of usually from 0.1 to 2000 mol, preferably from 0.3 to 1000 mol, and particularly preferably from 0.5 to 800 mol per mol of the titanium atom in the solid catalyst component(A), and usually from 0.001 to 5 mol, preferably from 0.005 to 3 mol, and particularly preferably from 0.01 to 1 mole per mol of the organoaluminum compound(B).

A temperature of the main polymerization is usually from -30 to 300°C, and preferably from 20 to 180°C. A polymerization pressure is not particularly limited, and from an industrial and economical point of view, it is usually from atmospheric pressure to 100 $kg/cm^2$, and preferably from about 2 to 50 $kg/cm^2$. The polymerization may be carried out in either a batch-wise manner or a continuous manner according to a slurry or solution polymerization method, wherein an inert hydrocarbon solvent such as propane, butane, isobutane, pentane, hexane, heptane and octane is used, or a bulk polymerization method, wherein an olefin which is liquid at that polymerization temperature is used as a medium, or a gas phase polymerization method. It is permitted to use a chain transfer agent such as hydrogen in order to regulate a molecular weight of the polymer obtained.

In the polymer composition of the present invention, except basic components of the composition, additives, for example, antioxidants, pigments, antistatic agents, copper harm inhibiters, foaming agents, plasticizers, crosslinking agents can be compounded.

EXAMPLE

The present invention is explained in more detail with reference to the following Examples, which are only illustrative and not intended to limit the scope of the present invention.

Physical properties of the polymer were measured in the following manners.

(1) An intrinsic viscosity ([η](dl/g)) was measured in a tetralin solvent at 135°C using an Ubbellohde viscometer.

(2) Haze value was measured according to JIS K7105. A specimen is a film of 30 to 80 μm in thickness prepared by press-molding a polymer composition at 190°C.

(3) Dispersedparticle diameter of an inorganic solid in polymer composition

[Case of Example 1]

Dispersion state of an inorganic solid in a polymer was observed according to a method comprising the steps

of:

(i) embedding a particulate polymer powder in an epoxy resin to prepare a specimen,
(ii) cooling the specimen to -80°C,
(iii) slicing the cooled specimen with a microtome to obtain avery thin flake having a thickness of about 1000 angstroms. and
(iv) observing a dispersion state of the inorganic solid in the very thin flake at 60,000 magnification using a transmission electron microscope (Type H-8000) manufactured by Hitachi, Ltd. to obtain a two-dimensional image,
(v) analyzing the two-dimensional image using high-precision analysis software [IP-1000] manufactured by Asahi Engineering CO., Ltd. to determine a volume average dispersion particle diameter of the inorganic solid, and
(vi) conducting a treatment described above.

An area of the inorganic solid dispersed particle "*i*" in the two dimensional image is determined with an image analysis instrument, and the diameter of circle giving the area is defined as Ri, and Ri is substituted in the following equation:

$$d = \frac{\sum Ri^4}{\sum Ri^3}$$

(*i* is a number from 1 to n, and n is the number of particles)

[Case of Comparative Example 2]

A molded piece prepared by kneading a composition was cooled to -80°C, and sliced with a microtome to obtain a very thin flake having a thickness of about 1000 angstroms, and the dispersed state was observed in the same manner as mentioned above.

(4) BET specific surface area

It was measured by a nitrogen-adsorption method, which comprises the steps of (i) adsorbing a molecule, whose adsorbing occupation area is known, on a surface of sample powder, and (ii) calculating a specific surface area from a volume of the molecule adsorbed.

(5) Specific gravity

A specific gravity to water at 4°C was measured by Pentapycnometer PPY-6 manufactured by Quantachrome Instruments.

(6) Damping property

It was measured according to a method comprising the steps of:

(i) compression-molding a polymer composition at 230 °C to obtain a sheet having 0.3 mm in thickness,
(ii) cutting the sheet to obtain a test piece having a size of 3 mm × 20 mm, and
(iii) measuring tan δ thereof at a temperature of -150 to 150 °C as a viscoelasticity and at a frequency of 5 Hz using an apparatus, a trade name of EXSTER 6000, manufactured by Seiko Instruments Inc.. It is indicated that the larger is the peak value, the better is a damping ability.

Example 1

(1) Production of solid product(a)

A 200 ml flask equipped with a stirrer and a dropping funnel was purged with nitrogen, and thereafter 10 g of aluminum hydroxide slurried with 120 ml of hexane and 25 ml of a di-n-butyl ether solution of n-butylmagnesium chloride (concentration of 2.1 mmol/ml, manufactured by Yuki Gosei Kogyo Co., Ltd.) were fed therein and mixed, and the mixture was stirred for 1 hour at room temperature. After completion of stirring, the mixture was subjected to solid-liquid separation. The solid obtained was washed two times with each 17 ml of hexane and dried in vacuo, thereby

obtaining a pre-treated aluminum hydroxide.

Aluminum hydroxide used as the raw material is one having a BET specific area of 153 $m^3$/g, a density of 3.00 g/$cm^3$, and a primary particle diameter (corresponding to a BET specific area diameter) of 13 nm.

Next, a100 ml flask equipped with a stirrer and a dropping funnel was purged with nitrogen, and thereafter 7.5 g of the pre-treated aluminum hydroxide, 37.4 ml of hexane, 0.17 ml (0.5 mmol) of tetrabutoxytitanium and 1.9 ml (8.5 mmol) of tetraethoxysilane were fed therein and mixed to obtain a slurry.

To the slurry, 4.3 ml of a di-n-butyl ether solution having a n-butylmagnesium chloride concentration of 2.1 mmol/ml, manufactured by Yuki Gosei Kogyo Co., Ltd. was gradually dropped from the dropping funnel while keeping an inner temperature of the flask to 5°C. After completion of dropping, the mixture was further stirred for 45 minutes at 5°C, and successively further stirred for 45 minutes at room temperature. The reaction mixture was subjected to solid-liquid separation, and the solid obtained was washed two times with each 37.4 ml of hexane, thereby obtaining a solid product. To the solid product, 30.1 ml of toluene was added to obtain a slurry.

(2) Production of solid catalyst component

The above-mentioned solid product slurry was heated to 95°C, and thereafter 1.1 ml (4.1 mmol) of diisobutyl phthalate was added thereto, followed by 1 hour reaction, thereby obtaining a reaction mixture. The reaction mixture was subjected to solid-liquid separation at 95°C, and the solid obtained was washed at room temperature two times with each 30.1 ml of toluene.

To the solid washed, 30.0 ml of toluene was added, and thereafter a mixture of 0.9 ml (5.3 mmol) of di-n-butyl ether and 16.2 ml (147.7 mmol of titanium tetrachloride was added thereto. The mixture was stirred for 3 hours at 95°C. The resulting reaction mixture was subjected to solid-liquid separation at 95°C, and the solid obtained was washed at 95°C two times with each 30.0 ml of toluene.

To the solid washed, a mixture of 30.0 ml of toluene, 0.9 ml (5.3 mmol) of di-n-butyl ether and 16.2 ml (147.7 mmol) of titanium tetrachloride was added. The mixture was stirred for 1 hour at 95°C. The resulting reaction mixture was subjected to solid-liquid separation at 95°C, and the solid obtained was washed at 95°C three times with each 30.0 ml of toluene, and successively washed at ambient temperature three times with each 30.0 ml of hexane. The solid washed was dried in vacuo, thereby obtaining 10.1 g of a solid catalyst component.

(3) Polymerization of propylene

A 3 liter agitation type stainless steel autoclave was purged with argon, and 1000 ml of heptane, 2.6 mmol of triethylaluminumas as a component (B), 0.26 mmol of tert-butyl-n-propyl-dimethoxysilane as a component (C), and 1.495 g of the above-mentioned solid catalyst component as a component (A), were fed therein. Thereafter, hydrogen in an amount corresponding to a partial pressure of 350 mmHg was added thereto. Successively, 100 g of liquid propylene was fed therein, and thereafter temperature of the autoclave was raised to 60°C, and polymerization was continued for 10 minutes at 60°C. After completion of polymerization, the unreacted monomer was purged. The polymer obtained was dried in vacuo at 70°C for 2 hours, thereby obtaining 85 g of polypropylene powder.

A yield of polypropylene per g of the solid catalyst component was found to be about 57 g. A aluminum hydroxide content in the polypropylene was calculated from the weight of aluminum hydroxide contained in the catalyst used, and the weight of the polymer obtained, and found to be 14600 ppm by weight.

As the result, the dispersed particle diameter was 65.4 nm. $\theta$ was 5, and in the polypropylene composition, the content of the aluminum hydroxide having a dispersed particle diameter is within the range of 0.1 to 100nm was 88.9 % by weight. An intrinsic viscosity [$\eta$] and tan $\delta$ peak intensity) of the polypropylene composition were found to be 0.84 (dl/g) and 0.042, respectively. A haze value of a film of the composition was 74.7%.

Comparative Example 1

(1) Production of solid product

A 500 ml flask equipped with a stirrer and a dropping funnel was purged with argon, and thereafter 290 ml of hexane, 8.9 g (26.1 mmol) of tetrabutoxytitanium, 3.1 ml(11.8 mmol) of diisobutyl phthalate and 87.4 g (392 mmol) of tetraethoxysilane were fed therein and stirred to obtain a uniform solution. To the solution, 199 ml of a di-n-butyl ether solution having a n-butylmagnesium chloride concentration of 2.1 mmol/ml, manufactured by Yuki Gosei Kogyo Co., Ltd. was gradually dropped from the dropping funnel while keeping an inner temperature of the flask to 6°C. After completion of dropping, the mixture was further stirred for 1 hour at room temperature.

The reaction mixture obtained was subjected to solid-liquid separation at ambient temperature, and the solid product obtained was washed three times with each 260 ml of toluene. To the solid washed, toluene was added to

obtain a slurry having a solid product concentration of 0.4 g/ml.

(2) Production of solid catalyst component

52 ml of the slurry obtained in the above(1) was fed, and 25.5 ml of a supernatant liquid of the slurry were removed. To the remainder, a mixture of 0.80 ml(6.45 mmol) of di-n-butyl ether and 16.0 ml (0.146 mol) of titanium tetrachloride was added, and then 1.6 ml (11.1 mmol:0.20 ml/l g of the solid product) of phthalic chloride was added, followed by heating to 115°C and stirring for 3 hours at this temperature. After completion of the reaction, the reaction mixture obtained was subjected to solid-liquid separation at the same temperature, and the solid obtained was washed two times with each 40 ml of toluene. To the solid washed in the flask, 10.0 ml of toluene, 0.45 ml (1.68 mmol) of diisobutyl pbthalate, 0.80 ml (6.45 mmol) of butyl ether and 8.0 ml (0.073 mol) of titanium tetrachloride were added. The mixture was stirred for 1 hours at 115°C. After completion of the reaction, the mixture was subjected to solid-liquid separation at 115°C and the solid obtained was washed at 115°C three times with each 40 ml of toluene, washed three times with each 40 ml of hexane, and then dried in vacuo to obtain a solid catalyst component.

(3) Polymerization of propylene

A 3 liter agitation type stainless steel autoclave was purged with argon, and 1000 ml of heptane, 2.6 mmol of triethylaluminum, 0.26 mmol of tert-butyl-n-propyl-dimethoxysilane and 0.0273 g of the solid catalyst component obtained in the above (2) were fed therein. Thereafter, hydrogen in an amount corresponding to a partial pressure of 1500 mmHg was added thereto. Successively, 80 g of liquid propylene was fed therein, and thereafter temperature of the autoclave was raised to 70°C, and polymerization was continued for 60 minutes at 70 °C. After completion of polymerization, the unreacted monomer was purged. The polymer obtained was dried in vacuo at 70°C for 2 hours, thereby obtaining 138 g of polypropylene powder.

A yield of polypropylene per g of the solid catalyst component was found to be PP/cat = 5062 (g/g). An intrinsic viscosity [η] and a peak intensity of tan δ were found to be 0.86(dl/g) and 0.029, respectively. A film of the polypropylene has a haze value of 74.3%.

Comparative Example 2

Polypropylene obtained in the above Comparative Example 1 and aluminum hydroxide as that used in the above Example 1 were kneaded at 190 °C for three minutes using a roll kneader to obtain a kneaded product, which had the aluminum hydroxide content of 14000 ppm by weight. The dispersed state of aluminum hydroxide in the polymer composition was observed using TEM.

As the result, the dispersed particle diameter was 1258 nm and a state in which a large number of the primary particles were coagulated was confirmed. θ was 97, and in the polypropylene composition, the content of the aluminum hydroxide having a dispersed particle diameter is within the range of 0.1 to 100nm was 0.065 % by weight. An intrinsic viscosity [η] and a peak intensity of tan δ were found to be 0.86 (dl/g) and 0.029, respectively. A film of the polypropylene has a haze value of 74.4%.

As described above, according to the present invention, the olefin polymer composition in which excellent properties(particularly damping property) are given without deteriorating transparency, are provided.

## Claims

1. An olefin polymer composition which comprises an olefin polymer and inorganic solid dispersed in the olefin polymer, wherein the coagulation degree θ of the inorganic solid satisfies the following expression:

$$0 < \theta \leqq 10,$$

wherein θ is a value determined by dividing d by D, d represents the dispersion particle diameter of the inorganic solid dispersed in the olefin polymer, and D represents the primary particle diameter of the inorganic solid used for being contained in the olefin polymer.

2. The olefin polymer composition according to claim 1, wherein the content of the inorganic solid is 0.001 to 50 % by weight.

3. The olefin polymer composition according to claim 1 or 2, wherein the primary particle diameter is 0.1 to 300 nm.

4. The olefin polymer composition according to claim 1 to 3, wherein the inorganic solid is aluminum hydroxide having a dispersed particle diameter within the range of 0.1 to 100nm and its content is over 70% by weight.

5. The olefin polymer composition according to claim 1 to 4, wherein the olefin polymer is a polymer of ethylene or an $\alpha$-olefin.

European Patent Office

# EUROPEAN SEARCH REPORT

Application Number
EP 01 13 0601

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 300 329 A (BRANCATO JACK J ET AL) 24 January 1967 (1967-01-24)<br>* examples 1-23 * | 1-5 | C08F2/44<br>C08K3/00<br>C08L23/02 |
| X | US 3 325 442 A (MCMANIMIE ROBERT J) 13 June 1967 (1967-06-13)<br>* column 3, line 15 - line 55 *<br>* claims 1-9 * | 1-5 | |
| X | WO 99 47598 A (ALEXANDRE MICHAEL ;DUBOIS PHILIPPE G (BE); GARCIA MARTI MIGUEL (BE) 23 September 1999 (1999-09-23)<br>* claims 1-15 * | 1-5 | |
| X | WO 00 22010 A (BASF AG ;MUELHAUPT ROLF (DE); REICHERT PETER (DE); GEPRAEGS MICHAE) 20 April 2000 (2000-04-20)<br>* page 2, line 41 - page 3, line 3 *<br>* claims 1-9 * | 1-5 | |

TECHNICAL FIELDS SEARCHED (Int.Cl.7)

C08F
C08K

The present search report has been drawn up for all claims

| Place of search | Date of completion of the search | Examiner |
|---|---|---|
| THE HAGUE | 22 March 2002 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 13 0601

This annex lists the patent family membersrelating to the patent documents cited in the above-mentioned European search report.
The members are as contained in the European Patent Office EDP file on
The European Patent Office is in no way liable for these particulars which are merely given for the purpose of information.

22-03-2002

| Patent document cited in search report | Publication date | Patent family member(s) | Publication date |
|---|---|---|---|
| US 3300329 A | 24-01-1967 | BE 580554 A | |
| | | BE 601325 A | |
| | | FR 1229343 A | 06-09-1960 |
| | | FR 79624 E | 28-12-1962 |
| | | GB 929101 A | 19-06-1963 |
| | | GB 859696 A | 25-01-1961 |
| | | GB 929102 A | |
| | | LU 37396 A | |
| | | LU 39846 A1 | 02-05-1961 |
| | | NL 6514881 A | 25-01-1966 |
| US 3325442 A | 13-06-1967 | NONE | |
| WO 9947598 A | 23-09-1999 | AU 3004699 A | 11-10-1999 |
| | | BR 9908859 A | 31-10-2000 |
| | | CA 2323667 A1 | 23-09-1999 |
| | | CN 1293692 T | 02-05-2001 |
| | | EP 1064323 A1 | 03-01-2001 |
| | | HU 0102111 A2 | 28-10-2001 |
| | | NO 20004634 A | 08-11-2000 |
| | | PL 342935 A1 | 16-07-2001 |
| | | TR 200002658 T2 | 21-12-2000 |
| | | WO 9947598 A1 | 23-09-1999 |
| WO 0022010 A | 20-04-2000 | DE 19846314 A1 | 13-04-2000 |
| | | WO 0022010 A1 | 20-04-2000 |

EPO FORM P0459

For more details about this annex : see Official Journal of the European Patent Office, No. 12/82